# EUROPEAN PATENT SPECIFICATION

(11) **EP 0 395 127 B1**
(45) Date of publication and mention of the grant of the patent: **02.06.1993**
(21) Application number: 90200522.2
(22) Date of filing: 06.03.1990
(51) Int. Cl.: B60J 7/04

(54) **Open roof construction for a vehicle**
Verschiebbare Dachkonstruktion für ein Fahrzeug
Construction de toit ouvrant pour véhicule

(30) Priority: 24.04.1989 NL 8901028
(43) Date of publication of application: 31.10.1990
(73) Proprietor: VERMEULEN-HOLLANDIA OCTROOIEN II B.V., NL-2031 EA Haarlem (NL)
(72) Inventor: Huyer, Johannes Nicolaas, NL-1991 BN Velserbroek (NL)
(74) Representative: Metman, Karel Johannes

(56) References cited:
- DE-A- 1 605 936
- GB-A- 2 185 449
- US-A- 4 589 694

## Description

The invention relates to an open roof construction for a vehicle, comprising a water gutter having one or more outlet openings in each of which a drain tube is provided.

Generally the open roof constructions are provided with one or more water gutters for catching any water seeping past the panel in case of an open roof construction having a rigid panel. The water which is catched is then discharged from the water gutter through the or each drain tube to which, for example a flexible hose is connected extending downwardly through a window stile of the vehicle and discharging the water outwardly of the body of the vehicle. The attachment of the drain tubes to the water gutter is a problem already for a long time. In case of a metal water gutter it is common to attach the drain tube, which is also of metal, to the water gutter by means of brazing, welding of glueing. This method of attachment, however, is laborious and can be done automatically only with the help of expensive devices. To solve this problem it is already proposed to arrange in each outlet opening a grommet receiving a drain tube.

The document GB-A- 2 185 449 corresponds to the preamble of claim 1.

It is an object of the present invention to provide an open roof construction for a vehicle wherein the attachment of a drain tube in the respective outlet opening of the water gutter is further improved.

To achieve this object the open roof construction of the present invention has the features of the characterizing portion of claim 1.

Due to these features according to the present invention the attachment of each drain tube to the water gutter of the open roof construction is very simple. Then it is now only necessary to insert the inner part of the drain tube through the outlet opening from the inner side and to subsequently arrange the outer part around it such that the water gutter is clamped between the inner and outer parts of the drain tube whereafter the inner and outer parts of the drain tube are interconnected. The interconnection of the inner and outer parts of the drain tube then also accomplishes the connection of the drain tube to the water gutter.

The connection between the inner and outer parts of the drain tube can be formed by cooperating connection means, preferably including barbed hook-like snap means, such as engaging saw teeth provided on the inner surface of the outer part and on the outer surface of the inner part. In this way it is only necessary to slide the outer part over the inner part projecting through the outlet opening of the water gutter until the inner and outer parts clamp the water gutter between them in order to effect the attachment of the drain tube to the water gutter.

It is favourable therein if the inner and outer parts of the drain tube are attachable in different relative positions, for example by arranging on the inner and/or outer part a plurality of saw teeth spaced lengthwise thereof.

Due to this feature the drain tube can be used for different wall thicknesses of the water gutter around the outlet opening just like that, while it is also easy to compensate for tolerances in the wall thickness of the water gutter around the outlet opening.

To further improve the sealing between the drain tube and the water gutter it is possible that a seal, such as a sealing ring or paste, is provided between the inner surface of the water gutter and the inner part of the drain tube.

This seal can also serve as biasing means for the clamping connection between the inner and outer parts of the drain tube thereby insuring a proper and lasting connection between the drain tube and the water gutter under all circumstances. Of course, it would also be possible to make the inner and/or outer part of the drain tube, preferably being of plastic, at least partially resilient.

Further features and advantages of the invention will appear from the following description with reference to the accompanying drawing showing an embodiment of the open roof construction according to the invention by way of example.

Fig. 1 is a very schematic plan view of a frame of an open roof construction constructed as a sliding roof.

Fig. 2 is an enlarged sectional view along the line II-II in fig. 1.

Fig. 3 is a sectional view along the line III-III in fig. 2.

Fig. 4 illustrates detail IV-IV in fig. 3 on a enlarged scale.

Fig. 5 is a view corresponding to that of fig. 2 showing an alternative embodiment.

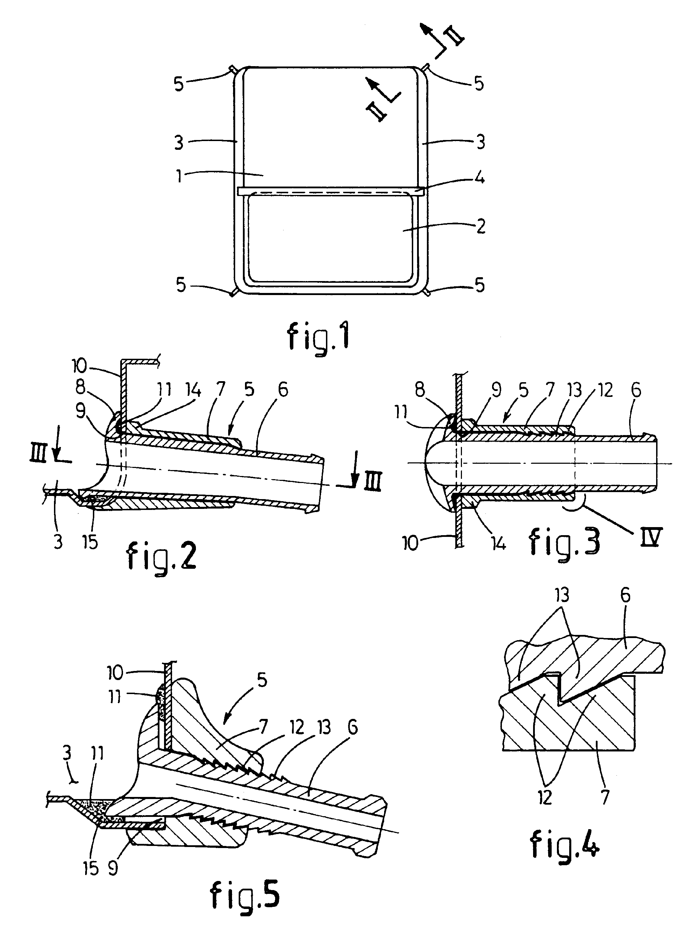

Fig. 1 shows in a very schematic way a frame 1 of an open roof construction constructed as sliding roof or tilt-sliding roof. Of course, the invention may also be used in other types of open roof constructions. Near the front side the frame 1 is provided with a passage opening 2 and, when the open roof construction is mounted in a vehicle, it is lying under the opening in the fixed roof thereof. Along both longitudinal edges and front edge of the stationary frame extends a stationary water gutter 3, and there is also provided a water gutter 4 co-operating with the drive mechanism of the panel (not shown) and connecting to the water gutter 3 and lying under the rear edge of the roof opening in the closed position of the panel. At the four corners of the frame 1 drain tubes 5 connect to the water gutter 3 in order to discharge any water received in the water gutter 3. One of the drain tubes 5 is shown in more detail in fig. 2, 3 and 4.

Fig. 2 and 3 show that the drain tube 5 mainly consists of an inner tube part 6 and an outer fixing part 7 both preferably made of plastic by means of injection-moulding. The tube part 6 is provided on its inner end with an outwardly projecting edge or collar 8 extending through a substantial part of the circumference. The outer dimensions of the tube part 6 and the edge 8 are such that the tube part 6 can be inserted through an opening 9 in a side wall 10 of the water gutter 3 from the inner side through such a distance that the edge 8 comes into engagement with the inner surface of the water gutter wall 10 around the opening 9. To obtain a good seal between the tube part 6 of the drain tube 5 and the wall 10 of the gutter 3 a sealing means 11, such as a rubber sealing ring or a sealing paste, can be provided.

The fixing part 7 of the drain tube 5 is shaped as a ring-like sleeve fitting around the tube part 6. On its inner surface the fixing part 7 is provided with a plurality of saw teeth shaped lock or snap means 12 adapted to cooperate with fitting saw teeth-shaped lock or snap means 13 on the outer surface of the tube 6, which is also clearly visualised in fig. 4. The saw teeth-shaped lock or snap means 12 and 13 are shaped so as to function as barbed hooks and as a result thereof the fixing part 7 is able to be slid over the tube part 6 in the direction to the wall 10 of the water gutter, but cannot be moved anymore in opposite direction when the saw teeth shaped lock or snap means 12 and 13 are in engagement. In this manner, after the tube part 6 has been inserted through the opening 9 in the wall 10 of the water gutter 3 from the inner side, it is possible to slide the fixing part 7 over the tube part 6 until the wall 10 of the water gutter 3 and the sealing means 11 are tightly clamped between the edge 8 of the tube part 6 and the thickened facing end 14 of the fixing part 7, wherein the lock or snap means 12 and 13 on the tube part 6 and the fixing part 7 are able to resist and maintain this clamping force. In this manner, the connection between the tube part 6 and the fixing part 7 causes a tight clamping connection between the drain tube 5 and the wall 10 of the water gutter 3.

In fig. 2 and 3 it can further be seen that the bottom of the water gutter adjacent the opening 9 in the side wall 10 is provided with a recess 15 in which the inner end of the tube part 6 having a configuration adapted to said recess extends such that the lower inner surface of the tube part 6 connects to the remainder of the bottom of the water gutter 3 without a difference in height. The edge 8 of the tube part 6 and the facing end 14 of the fixing part 7 may be adapted to the shape of the recess 15 of the water gutter 3.

Fig. 5 shows an alternative embodiment of the drain tube 5, in which the same parts are used but having a different shape. The tube part 7 is shorter and thicker and the facing end thereof has a larger contacting area to the wall 10 of the water gutter 3. In the recess 15 of the water gutter 3 the seal 11 also takes care of the connection between the bottom of the water gutter 3 and a passage of the tube part 6 of the drain tube 5. The lock or snap means 12, 13 can be chosen with such a fine toothing as is necessary for the adjustment of the clamping connection. Since several teeth on the inner and outer tube parts 6, 7 are in engagement with each other the clamping force is distributed over a large area.

From the forgoing it will be clear that the invention provides an open roof construction for a vehicle in which the drain tubes can be attached to the water gutter in a very simple way. Such attachment can be mechanized in a simple manner. In this method of attachment time-taking brazing or welding operations can be avoided. In the case of a metal frame for the open roof construction the attachment of the drain tubes takes place in the already painted frame so that metal-to-metal connections which are vulnerable to rust are avoided. The adjustable clamping connection between both parts of the drain tube and the wall of the water gutter always ensures a proper attachment and a large compensation for dimensional tolerances of the frame.

The invention is not restricted to the embodiment shown in the drawing and described herein before by way of example, which can be varied in different manners within the scope of the invention.

## Claims

1. Open roof construction for a vehicle, comprising a water gutter (3) having one or more outlet openings (9) in each of which a drain tube (5) is provided, said drain tube (5) including an inner part (6) extending through the respective outlet opening (9) and an outer part (7) extending around the inner part (6) and engaging the outer surface of the water gutter (3), said inner part (6) and said outer part (7) being interconnected, **characterized in that** the inner part (6) of the drain tube (5) is adapted to be inserted from the inside of the water gutter through the outlet opening (9) and into the outer part until a projection (8) thereof engages the inner surface of the water gutter (3), while the outer part (7) of the drain tube (5) only engages the outer surface of the water gutter (3).

2. Open roof construction according to claim 1, wherein the connection between the inner and outer parts (6, 7) of the drain tube (5) is formed by cooperating connection means (12, 13).

3. Open roof construction according to claim 2, wherein the cooperating connection means consist of barbed hook-like lock or snap means (12, 13) formed on the inner surface of the outer part (7) and on the outer surface of the inner part (6).

4. Open roof construction according to claim 3, wherein the lock or snap means (12, 13) include saw teeth engaging one another.

5. Open roof construction according to claim 4, wherein on the inner and/or outer part (6, 7) a plurality of saw teeth (12, 13) spaced lengthwise thereof are provided.

6. Open roof construction according to one of the preceding claims, wherein a seal (11), such as a sealing ring or paste, is provided between the inner surface of the water gutter (3) and the inner part (6) of the drain tube (5).

7. Open roof construction according to one of the preceding claims, wherein the inner and outer parts (6, 7) are made of a thermoplastic, preferably by means of injection moulding.

8. Open roof construction according to one of the preceding claims, wherein a recess (15) is formed in the bottom of the water gutter (3) adjacent the outlet opening (9), the inner end of the tube part (6) being positioned in said recess (15) and the lower inner surface of the tube part (6) connects to the bottom of the water gutter (3) adjacent the recess (15) in a flush manner.

## Patentansprüche

1. Schiebedachkonstruktion für ein Fahrzeug, mit einer Wasser-Abflußrinne (3), welche mit einer oder mehreren Abflußöffnungen (9) versehen ist, wovon jede mit einem Abflußrohr (5) versehen ist, wobei das Abflußrohr (5) mit einem Innenteil (6) versehen ist, welcher sich durch die jeweilige Abflußöffnung (9) hindurch erstreckt, und ein Außenteil (7) sich um den Innenteil (6) herum erstreckt und mit der äußeren Fläche der Wasser-Abflußrinne (3) im Eingriff steht, während der Innenteil (6) und der Außenteil (7) miteinander verbunden sind, **dadurch gekennzeichnet,** **daß** der Innenteil (6) des Abflußrohrs (5) derart gestaltet ist, daß der Innenteil von der Innenseite der Wasser-Abflußrinne durch die Abflußöffnung (9) und in den Außenteil eingesetzt werden kann, bis ein Vorsprung des Innenteils mit der inneren Fläche der Wasser-Abflußrinne (3) in Kontakt gelangt, während der Außenteil (7) des Abflußrohrs (5) nur mit der Außenfläche der Wasser-Abflußrinne in Kontakt tritt.

2. Schiebedachkonstruktion nach Anspruch 1, wobei die Verbindung zwischen dem Innenteil und dem Außenteil (6,7) des Abflußrohrs (5) durch ein Zusammenwirken von Verbindungseinrichtungen (12,13) gewährleistet ist.

3. Schiebedachkonstruktion nach Anspruch 2, wobei die zusammenwirkenden Verbindungseinrichtungen Verriegelungs- und Einrasteinrichtungen (12,13) mit Widerhaken sind, welche auf der inneren Fläche des Außenteils (7) und auf der äußeren Fläche des Innenteils (6) ausgebildet sind.

4. Schiebedachkonstruktion nach Anspruch 3, wobei die Verriegelungs- und Einrasteinrichtungen (12,13) sägezahnförmige Widerhaken aufweisen, welche miteinander im Eingriff stehen.

5. Schiebedachkonstruktion nach Anspruch 4, wobei der Innen- und/oder Außenteil (6,7) eine Mehrzahl von sägezahnförmigen Widerhaken aufweisen, welche in Längsrichtung im Abstand zueinander angeordnet sind.

6. Schiebedachkonstruktion nach einem der vorangehenden Ansprüche, wobei eine Dichtung (11) wie ein Dichtring oder eine Dichtungspaste zwischen der Innenfläche der Wasser-Abflußrinne (3) und dem Innenteil (6) des Abflußrohrs (5) angeordnet ist.

7. Schiebedachkonstruktion nach einem der vorangehenden Ansprüche, wobei der Innen- und der Außenteil (6,7) aus einem thermoplastischen Kunststoff hergestellt sind, vorzugsweise durch Spritzgießen.

8. Schiebedachkonstruktion nach einem der vorangehenden Ansprüche, wobei eine Vertiefung (15) in der Nähe der Abflußöffnung (9) in dem Boden der Wasser-Abflußrinne (3) ausgebildet ist, wobei das innere Ende des Innenteils (6) in der Vertiefung (15) angeordnet ist und die untere, innere Fläche des Innenteils (6) mit dem Boden der Wasser-Abflußrinne (3) in der Nähe der Vertiefung (15) bündig verbunden ist.

## Revendications

1. Construction de toit ouvrant pour un véhicule, comportant une gouttière (3) à eau ayant une ou plusieurs ouvertures (9) de sortie dans chacune desquelles un tube (5) d'écoulement est prévu, ledit tube (5) d'écoulement comprenant une partie intérieure (6) s'étendant à travers l'ouverture de sortie respective (9), et une partie extérieure (7) s'étendant autour de la partie intérieure (6) et engageant la surface extérieure de la gouttière (3) à eau, ladite partie intérieure (6) et ladite partie extérieure (7) étant reliées entre elles, caractérisée en ce que la partie intérieure (6) du tube (5) d'écoulement est destinée à être insérée depuis l'intérieur de la gouttière à eau à travers l'ouverture (9) de sortie et jusque dans la partie extérieure jusqu'à ce qu'une saillie (8) de cette partie intérieure porte contre la surface intérieure de la gouttière (3) à eau, tandis que la partie extérieure (7) du tube (5) d'écoulement porte uniquement contre la surface extérieure de la gouttière à eau (3).

2. Construction de toit ouvrant selon la revendication 1, dans laquelle la liaison entre les parties intérieure et extérieure (6, 7) du tube (5) d'écoulement est formée par des moyens coopérants (12, 13) de liaison.

3. Construction de toit ouvrant selon la revendication 2, dans laquelle les moyens coopérants de liaison comprennent des moyens (12, 13) de verrouillage ou d'encliquetage analogues à des crochets dentés, formés sur la surface intérieure de la partie extérieure (7) et sur la surface extérieure de la partie intérieure (6).

4. Construction de toit ouvrant selon la revendication 3, dans laquelle les moyens de verrouillage ou d'encliquetage (12, 13) comprennent des dents de scie s'enclenchant entre elles.

5. Construction de toit ouvrant selon la revendication 4, dans laquelle, sur la partie intérieure et/ou la partie extérieure (6, 7), sont prévues plusieurs dents de scie (12, 13) espacées sur la longueur de cette partie.

6. Construction de toit ouvrant selon l'une des revendications précédentes, dans laquelle un joint d'étanchéité (11), tel qu'une bague ou une pâte d'étanchéité, est prévu entre la surface intérieure de la gouttière à eau (3) et la partie intérieure (6) du tube (5) d'écoulement.

7. Construction de toit ouvrant selon l'une des revendications précédentes, dans laquelle les parties intérieure et extérieure (6, 7) sont réalisées en une matière thermoplastique, avantageusement au moyen d'un moulage par injection.

8. Construction de toit ouvrant selon l'une des revendications précédentes, dans laquelle un évidement (15) est formé dans le fond de la gouttière à eau (3) à proximité immédiate de l'ouverture de sortie (9), l'extrémité intérieure de la partie (6) du tube étant placée dans ledit évidement (15) et la surface intérieure inférieure de la partie de tube (6) étant reliée au fond de la gouttière à eau (3) à proximité immédiate de l'évidement (15) d'une manière affleurante.
